# EUROPÄISCHE PATENTSCHRIFT

(11) **EP 4 180 380 B1**
(45) Veröffentlichungstag und Bekanntmachung des Hinweises auf die Patenterteilung: **21.05.2025**
(21) Anmeldenummer: 21208514.6
(22) Anmeldetag: 16.11.2021
(51) Int. Cl.: B66F 17/00

(54) **VERFAHREN ZUR HINDERNISBEHANDLUNG IN EINEM FLURFÖRDERZEUG UND FLURFÖRDERZEUG**
METHOD FOR HANDLING OBSTACLES IN AN INDUSTRIAL TRUCK AND INDUSTRIAL TRUCK
PROCÉDÉ DE TRAITEMENT DES OBSTACLES DANS UN CHARIOT DE MANUTENTION ET CHARIOT DE MANUTENTION

(43) Veröffentlichungstag der Anmeldung: 17.05.2023
(73) Patentinhaber: Jungheinrich Aktiengesellschaft, 22047 Hamburg (DE)
(72) Erfinder: ALTMANN, Tony, 24616 Brokstedt (DE); ROCKEL, Sebastian, 22846 Norderstedt (DE); HEISE, Sven-Ole, 24783 Osterrönfeld (DE); QUICKERT, Steffen, 27793 Wildeshausen (DE); FISCHER, Christian, 24598 Boostedt (DE)
(74) Vertreter: Weickmann & Weickmann PartmbB

(56) Entgegenhaltungen:
- EP-A1- 2 763 120
- EP-A1- 3 456 681
- WO-A1-2013/074034
- US-A1- 2013 060 415
- US-A1- 2014 005 875
- US-A1- 2018 178 783
- US-A1- 2019 071 292
- US-A1- 2019 271 990

## Beschreibung

Die vorliegende Erfindung betrifft ein Verfahren zur Hindernisbehandlung in einem Flurförderzeug, welches wenigstens eine Sensoreinheit umfasst, welche in Hauptfahrrichtung des Flurförderzeugs angeordnet und dazu eingerichtet ist, in einem vorbestimmten Winkelbereich Hindernisse erfassen zu können. Weiterhin betrifft die Erfindung ein Flurförderzeug, welches dazu eingerichtet ist, ein derartiges Verfahren während seines Betriebs auszuführen.

Im täglichen Einsatz von Transportvorrichtungen in Logistikeinrichtungen kann es gerade in Stoßzeiten vermehrt zu Kollisionen zwischen Flurförderzeugen und Lagerausstattung, Flurförderzeugen und weiteren Fahrzeugen oder Flurförderzeugen und Personen kommen. Ein Ansatz, um derartigen Kollisionen entgegenzuwirken, kann darin bestehen, auf ein funkbasiertes System zurückzugreifen, mit welchem die Flurförderzeuge über das Vorliegen von Hindernissen informiert werden. Hierbei zeigt sich jedoch, dass gerade bei automatisierten Fahrzeugen die aktuell verwendete Sensorik zu unnötigen Abbremsungen und damit zu einer Einschränkung der Leistungsfähigkeit derartiger Fahrzeuge führt.

Um ferner auch Objekte und Personen ohne derartige Funkausrüstung in das Schutzkonzept mit einbeziehen zu können, ist es bekannt, Sensoreinheiten in Flurförderzeugen zum Einsatz zu bringen, welche eine Umgebung davon auf Hindernisse überprüfen und insbesondere in der Hauptfahrtrichtung an den Flurförderzeugen montiert und ausgerichtet sein können. Hierbei werden sogenannte Schutzfelder aufgespannt, welche häufig in horizontalen Ebenen knapp oberhalb des Fahruntergrunds liegen.

Wird durch eine derartige Sensoreinheit ein Objekt erkannt, so kann eine entsprechende Information erzeugt und/oder eine Fahrzeugreaktion ausgelöst werden.

Hierbei ist selbstverständlich erwünscht, dass ein entsprechendes Fahrzeug nur dann eine Reaktion ausführt, wenn eine Kollision in der Tat möglich ist, das heißt, wenn sich ein Hindernis im vorgesehenen Bewegungsbereich des Fahrzeugs befindet. Somit ist es für derartige Sicherheitssysteme unerlässlich, eine Kollisionszone oder Schutzzone zu definieren.

In bisher bekannten Verfahren zur Definition von Kollisionszonen war es üblich, eine Mehrzahl von Kollisionszonen in Form parametrisierter geometrischer Felder an geeigneten Stellen in einer Verarbeitungsanordnung fest einzuprogrammieren, um in einem Betrieb derartiger Flurförderzeuge auf sie zurückgreifen zu können. Hierbei wurde dann zur Verbesserung der Schutzwirkung bei unterschiedlichen Geschwindigkeiten und Lenkwinkeln des entsprechenden Flurförderzeugs zwischen den verschiedenen fest einprogrammierten Feldern im Sichtbereich der Sensoreinheit hin und her geschaltet, um mögliche Kollisionsgefahren festzustellen und gleichzeitig nicht relevante Bereiche auszublenden. Demzufolge konnten beispielsweise Schutzfelder eines autonomen Transportsystems (AGV - Automated Guided Vehicle) als Sicherheitssystem eines solchen Flurförderzeugs dienen, während sie im Rahmen der vorliegenden Erfindung auch in manuell gesteuerten Flurförderzeugen in der im Folgenden beschriebenen Weise zum Einsatz kommen können.

Hierbei zeigt sich jedoch, dass die mögliche Anzahl derartiger Felder systemseitig begrenzt ist und für das angesprochene Schalten durch die Zonen eine physische Verbindung zwischen den an diesem Verfahren beteiligten Komponenten der Verarbeitungsanordnung verwendet werden muss, meist auf Basis von digitalen Eingängen und Datenverbindungen. Ferner muss für jeden denkbaren Fahrzeugtyp und für jede Baureihe von Fahrzeugen ein anderer Satz von Feldern erzeugt und den entsprechenden Sensoreinheiten auf einem zugeordneten Speicher zur Verfügung gestellt werden. Dies bedeutet einen erheblichen konstruktiven und Kostenaufwand.

Beispielhaft sei in diesem Zusammenhang auf die US 2019/0271990 A1 verwiesen, welche ein Verfahren zur Hindernisbehandlung in einem Flurförderzeug lehrt, in welchem eine Schutzzone anhand Betriebsparametern des Fahrzeugs berechnet wird, das Verfahren umfassend:
- Erfassen einer momentanen Geschwindigkeit und eines momentanen Lenkwinkels von wenigstens einem gelenkten Rad des Flurförderzeugs mittels eines Geschwindigkeitssensors bzw. eines Lenkwinkelsensors des Flurförderzeugs;
- Berechnen einer Schutzzone anhand der momentanen Geschwindigkeit und des momentanen Lenkwinkels;
- Auswerten der von der wenigstens einen Sensoreinheit gelieferten Daten innerhalb der Schutzzone des Flurförderzeugs, und
- bei Feststellen eines Hindernisses in der Schutzzone Auslösen einer vorbestimmten Maßnahme.

Es ist somit im Rahmen der vorliegenden Erfindung gewünscht, einen verbesserten Ansatz zum Definieren einer Schutzzone in einem Flurförderzeug zu verwenden, welcher die oben genannten Nachteile ausräumen kann. Insbesondere soll ein Verfahren verwendet werden, mit welchem sowohl in automatisierten als auch manuell gesteuerten Flurförderzeugen Unfälle durch Kollisionen mit Hindernissen verhindert werden können, wobei die Hindernisse beispielsweise durch Personen, Paletten oder andere Objekte in der Betriebsumgebung des Flurförderzeugs gebildet sein können. Je nach eingesetztem Typ von Flurförderzeug können Ursachen für derartige Kollisionen beispielsweise in einem menschlichen Versagen liegen, also beispielsweise ein Übersehen eines Hindernisses durch einen Fahrer des Flurförderzeugs, oder aber auch in Fehlern in der Sensordatenverarbeitung oder im Sensor selbst bei autonom geführten Flurförderzeugen.

Bei der Verwendung derartiger Schutzzonen zeigt sich jedoch ferner, dass vielfältige Situationen auftreten können, in welchen falsch positive Erkennungen von Hindernissen vorkommen, beispielsweise in Fällen, in welchen manuell bediente Flurförderzeuge eine Kurve in der Nähe einer Wand fahren und bei einer einfachen Projektion des momentanen Fahrwegs des Flurförderzeugs in die Zukunft eine Kollision mit der Wand zu erwarten wäre, wenngleich der betreffende Fahrer des Flurförderzeugs die Situation unter Kontrolle hat und ein entsprechendes Gegenlenken rechtzeitig ausführen würde, um die Kurvenfahrt zu beenden und sich anschließend beispielsweise parallel zu der Wand zu bewegen. Entsprechende Szenarien sind zwar ebenfalls in autonom fahrenden Flurförderzeugen denkbar, da dort jedoch die geplante Fahrstrecke deterministisch ist und nicht auf ein Verhalten einer menschlichen Bedienperson abgezielt werden muss, kann in einem solchen Fall bereits im Vornherein abgeschätzt werden, ob es sich bei einer möglichen Verletzung einer Schutzzone um ein gewolltes Verhalten handelt, beispielsweise im Rahmen des oben angesprochenen Beispiels einer Kurvenfahrt, oder ob in der Tat eine Kollision mit einem zunächst unvorhergesehenen Hindernis zu befürchten ist.

Somit besteht an dieser Stelle ein Bedürfnis nach einem Assistenzsystem und einem entsprechenden Verfahren, mit welchem in einem Betrieb eines derartigen Flurförderzeug festgestellte Hindernisse in einer verbesserten Weise behandelt werden können und Rückschlüsse darüber getroffen werden können, in wieweit eine momentane Situation des Flurförderzeugs hinsichtlich derartiger Hindernisse in der Tat problematisch ist, um falsch positive Erkennungen von Hindernissen vermeiden oder ganz ausschließen zu können, ohne jedoch in Situationen einzugreifen, in welchen insbesondere ein Fahrer des Flurförderzeugs die Situation unter Kontrolle hat und es sich um ein erwartbares Verhalten ohne Risiko handelt.

Zur Lösung dieser Aufgabe wird erfindungsgemäß ein Verfahren zur Hindernisbehandlung in einem Flurförderzeug vorgeschlagen, welches in einer Draufsicht einen bekannten Fahrzeuggrundriss aufweist und wenigstens eine Sensoreinheit umfasst, welche in Hauptfahrrichtung des Flurförderzeugs angeordnet und dazu eingerichtet ist, in einem vorbestimmten Winkelbereich Hindernisse erfassen zu können, das Verfahren umfassend ein Erfassen einer momentanen Geschwindigkeit und eines momentanen Lenkwinkels von wenigstens einem gelenkten Rad des Flurförderzeugs mittels eines Geschwindigkeitssensors bzw. eines Lenkwinkelsensors des Flurförderzeugs, ein Berechnen einer vorhergesagten Fahrzeugkontur anhand des Fahrzeuggrundrisses, der momentanen Geschwindigkeit und des momentanen Lenkwinkels derart, dass die vorhergesagte Fahrzeugkontur einer von dem Flurförderzeug in einem vorbestimmten Zeitraum zu überstreichenden Fläche entspricht, einem Auswerten der von der wenigstens einen Sensoreinheit gelieferten Daten innerhalb der vorhergesagten Fahrzeugkontur als eine Schutzzone des Flurförderzeugs, und bei einem Feststellen eines Hindernisses in der Schutzzone, eines Berechnens einer jeweiligen Lenkwinkeldifferenz zu beiden Seiten, bei welcher jeweils eine Kollision mit dem Hindernis vermieden wird, und eines Klassifizierens eines momentanen Schwierigkeitsgrads der Hindernisvermeidung anhand der berechneten Lenkwinkeldifferenzen anhand eines Lenkwinkeldifferenzgrenzwerts, und/oder eines Auslösens einer vorbestimmten Maßnahme anhand der berechneten Lenkwinkeldifferenzen anhand eines Lenkwinkeldifferenzgrenzwerts.

Durch das erfindungsgemäße Verfahren wird es ermöglicht, momentane Fahrsituationen, in welchen ein Hindernis in einer Schutzzone eines Flurförderzeugs festgestellt worden ist, anhand von Schwierigkeitsgraden zu klassifizieren, welche wenigstens auf einer Lenkwinkeldifferenz beruhen, welche zu einem Ausweichen des Hindernisses notwendig wäre, und/oder unmittelbar durch das Auslösen von Maßnahmen automatisch in den Betrieb des Fahrzeugs einzugreifen. Dementsprechend könnte im oben bereits angesprochenen Beispiel einer Kurvenfahrt in der Nähe einer Wand festgestellt werden, dass bereits bei einer geringen Lenkwinkeldifferenz in eine Richtung von der Wand weg eine Kollision vermieden werden könnte, so dass eine solche Situation mit einem niedrigen Schwierigkeitsgrad klassifiziert würde und/oder entschieden würde, dass keine Maßnahme im Sinne eines Eingreifens in den Betrieb des Fahrzeugs notwendig ist. Die in diesem Zusammenhang mögliche Verwendung eines Lenkwinkeldifferenzgrenzwerts ermöglicht hierbei in einer relativ einfachen Art und Weise eine Unterscheidung zwischen einer gewollten und einer ungewollten Schutzfeldverletzung für einen menschlichen Fahrer. Hierbei kann dieser Grenzwert von der momentanen Geschwindigkeit, dem momentanen Lenkwinkel, dem Erfahrungsniveau des Fahrers, etc. abhängen.

Es zeigt sich, dass hierbei die kleinere der beiden Lenkwinkeldifferenzen zur Klassifizierung des momentanen Schwierigkeitsgrads herangezogen werden kann, da in der Regel davon ausgegangen werden kann, dass ein Ausweichbewegung zu der entsprechenden Seite hin stattfinden würde, was einem typischen Verhalten eines menschlichen Fahrers eines derartigen Fahrzeugs entspricht. Dementsprechend wäre im oben angesprochenen Beispiel einer Kurvenfahrt im Bereich einer Wand irrelevant, dass die benötigte Lenkwinkeldifferenz zum Ausweichen des Hindernisses in der Richtung zu der Wand hin wesentlich größer wäre, da üblicherweise ein Ausweichen von der Wand weg stattfinden würde.

Wenngleich die Klassifizierung von momentanen Schwierigkeitsgraden im Betrieb eines Flurförderzeugs auch lediglich zur Sammlung von Daten für eine Evaluierung eines befahrenen Logistikumfelds oder ähnliches dienen könnte, so könnte ferner in dem erfindungsgemäßen Verfahren beispielsweise auch in Abhängigkeit von dem momentanen Schwierigkeitsgrad eine vorbestimmte Maßnahme an dem Flurförderzeug ausgelöst werden, um unmittelbar ein Assistenzsystem für eine erhöhte Betriebssicherheit bereitstellen zu können und unmittelbar einen Wirkzusammenhang zwischen dem Schwierigkeitsgrad und der entsprechenden Maßnahme zu schaffen. Hierbei kann die Art und Weise des Ausführens der vorbestimmten Maßnahme zudem von verschiedenen weiteren Parametern abhängen, wie weiter unten noch angesprochen werden wird.

Ein Beispiel für eine derartige vorbestimmte Maßnahme könnte ein Verringern einer momentanen und/oder maximalen Geschwindigkeit des Flurförderzeugs umfassen, so dass demzufolge entweder eine Begrenzung einer erreichbaren Geschwindigkeit des Flurförderzeugs oder ein unmittelbares automatisches Abbremsen davon, beispielsweise abhängig von dem ermittelten momentanen Schwierigkeitsgrad, vorgenommen werden kann. Insbesondere kann eine derartige Verringerung der maximalen oder momentanen Geschwindigkeit in einer Weise vorgenommen werden, dass in jedem Fall ein vollständiges Anhalten vor dem Hindernis möglich bleibt, wobei es sich um einen iterativen Prozess handelt, welcher bei einer anhaltenden Fahrt auf ein Hindernis zu letztlich zu einem vollständigen Stillstand des Fahrzeugs führen wird. Sollte dem hingegen unterdessen festgestellt werden, dass das Hindernis nicht mehr in der Schutzzone vorliegt, beispielsweise indem ihm ausgewichen worden ist oder sich das Hindernis selbst aus der Schutzzone herausbewegt hat, so kann die entsprechende Maßnahme aufgehoben und das Fahrzeug wieder beschleunigt und/oder seine Maximalgeschwindigkeit wieder angehoben werden.

Eine zusätzliche oder alternative vorbestimmte Maßnahme könnte ein Ausgeben einer entsprechenden Mitteilung an eine Bedienperson umfassen, beispielsweise eine Warnung an einer Anzeige oder ein akustisches Signal. Wenngleich hier in erster Linie an einen Fahrer des Flurförderzeugs im Falle eines manuell gesteuerten Fahrzeugs gedacht werden kann, so wäre selbstverständlich auch im Fall von ferngesteuerten oder autonom geführten Fahrzeugen eine Ausgabe an einen Fernbediener oder an einem Leitstand zur Information einer dort arbeitenden Bedienperson denkbar.

Hinsichtlich der Art der Ausgabe sind prinzipiell unterschiedliche Herangehensweisen denkbar, so könnte beispielsweise lediglich eine Warnleuchte im Blickfeld der Bedienperson aufleuchten oder ein akustisches Warnsignal ausgegeben werden, wenn eine Situation mit einem bestimmten Schwierigkeitsgrad vorliegt, oder der Bedienperson könnten weitere Informationen an einer dedizierten Anzeigevorrichtung bereitgestellt werden, beispielsweise eine Kartenansicht, auf welcher das entsprechende Hindernis zusammen mit dem Fahrzeug in relativer örtlicher Beziehung zusammen mit einer Warnung dargestellt wird.

Erfindungsgemäß können in dem vorliegenden Verfahren zum Klassifizieren des momentanen Schwierigkeitsgrads und/oder zum Auslösen der vorbestimmten Maßnahme noch weitere Parameter berücksichtigt werden, insbesondere der momentane Lenkwinkel des Flurförderzeugs, die momentane Geschwindigkeit des Flurförderzeugs, ein Erfahrungsniveau eines Fahrers des Flurförderzeugs und/oder die berechnete Lenkwinkeldifferenz im Vergleich zum momentanen Lenkwinkel. Ein Beispiel hierfür könnte darin bestehen, dass bei einer momentanen Geradeausfahrt und einer Erkennung eines Hindernisses in der entsprechenden Schutzzone stets eine Klassifizierung vorgenommen könnte, die eine unmittelbare vorbestimmte Maßnahme mit sich bringen würde, da davon ausgegangen werden kann, dass kein Fall auftreten sollte, in welchem das Flurförderzeug frontal auf ein Hindernis zufährt. Ebenfalls könnte bei einer höheren momentanen Geschwindigkeit früher und stärker abgebremst werden und es könnte berücksichtigt werden, dass aufgrund der auftretenden Fliehkräfte ein Ausweichen in eine Richtung entgegen einer momentanen Kurvenbewegung leichter auszuführen ist und folglich einen niedrigeren Schwierigkeitsgrad mit sich bringen kann. Zudem könnte berücksichtigt werden, dass es in Fällen, in welchen das Fahrzeug bereits eine Kurve durchfährt, sinnvoller sein kann, ein Ausweichen durch Geradelenken zu bewirken, selbst wenn die Lenkwinkeldifferenz dabei größer ist als bei einem Ausweichmanöver zum Kurveninneren, da hierbei das Lenken in Richtung Kurveninneres quasi ein Umkehren des Fahrzeugs bedeuten kann, während in der anderen Richtung ein Geradelenken des Fahrzeugs ein Ausweichen ermöglicht. Auch ist es bei Kurvenfahrten unter Umständen realistischer, dass eine angestrebte Fahrtrichtung eher in Richtung der Geradeausfahrt zeigt als eine Kurvenfahrt mit geringerem Radius, beispielsweise in einem Fall eines verspäteten Geradelenkens bei einer Kurvenfahrt.

Das Erfahrungsniveau des Fahrers kann derart in die Klassifizierung des momentanen Schwierigkeitsgrads und/oder das Auslösen der vorbestimmten Maßnahme einfließen, dass entsprechende Daten über das Erfahrungsniveau in geeigneter Weise hinterlegt werden und dann beispielsweise bei einem Fahrer mit mehr Erfahrung weniger starke Maßnahmen bei einem Erfassen eines Hindernisses eingeleitet werden als bei einem weniger erfahrenen Fahrer, da den beiden Fahrern unterschiedlich gute Fähigkeiten zum Vermeiden von Hindernissen und im Umgang mit potentiell kritischen Situationen zugesprochen werden. Ebenfalls könnten bei erfahreneren Fahrern gewisse Situationen noch geduldet werden, d.h. mit einem niedrigen oder gar keinem Schwierigkeitsgrad bewertet werden, die bei weniger erfahrenen Fahrern bereits mit einem höheren Schwierigkeitsgrad bewertet würden oder Maßnahmen auslösen würden. Auch die konkret ausgeführten Maßnahmen können in ähnlicher Weise von dem Erfahrungsniveau abhängig gemacht werden, beispielsweise durch ein stärkeres automatisches Abbremsen bei einem weniger erfahrenen Fahrer, um größere Sicherheitstoleranzen im Betrieb des Flurförderzeugs zu erzielen.

Wenngleich die Klassifizierung der momentanen Schwierigkeitsgrade zunächst einmal beliebig viele Abstufungen zulässt, so kann sie wenigstens einen einfachen Schwierigkeitsgrad und einen hohen Schwierigkeitsgrad umfassen, also zusätzlich zu einem Zustand ohne Schwierigkeitsniveau (keine Schutzfeldverletzung) zwei unterschiedliche Kategorien, welche einer tolerierbaren Schutzfeldverletzung und einer nicht tolerierbaren Schutzfeldverletzung entsprechen, in welchen also beispielsweise dementsprechend ein Ausweichlenkwinkelgrenzwert unterschritten bzw. überschritten ist. Hierbei könnte dann ferner bei einem Eintreten des niedrigen Schwierigkeitsgrads optional lediglich eine Warnung ausgegeben werden, während bei einem Eintreten des hohen Schwierigkeitsgrades automatische Maßnahmen in dem Flurförderzeug ausgelöst werden könnten, die sich auf den Betrieb davon auswirken, beispielsweise das bereits mehrfach angesprochene automatische Abbremsen davon. Alternativ könnte bei dem niedrigen Schwierigkeitsgrad keine Maßnahme erfolgen und bei dem hohen Schwierigkeitsgrad eine Warnung ausgegeben werden. Die Entscheidung darüber, bei welchem Schwierigkeitsgrad welche Maßnahme erfolgt, kann beispielsweise anhand des Erfahrungsniveaus des Fahrers oder anhand der momentan gefahrenen Geschwindigkeit erfolgen. So kann bei vergleichsweise niedriger Geschwindigkeit und hohem Schwierigkeitsgrad lediglich eine Warnung ausgegeben werden, während bei vergleichsweise hoher Geschwindigkeit und hohem Schwierigkeitsgrad ein automatisches Abbremsen erfolgen kann.

In diesem Zusammenhang kann ferner auch ein maximaler Lenkwinkel des Flurförderzeugs festgelegt werden, welcher zum Vermeiden einer Kollision nicht überschritten werden kann, so dass dementsprechend in gewissen Situationen festgestellt werden kann, dass ein Ausweichen in die entsprechende Richtung unter den momentanen Umständen ausgeschlossen ist.

Hinsichtlich der Erfassung von Hindernissen in der ermittelten Schutzzone kann die momentane Geschwindigkeit des Flurförderzeugs erfindungsgemäß in einer derartigen Weise eingehen, dass über die Auswertung eines vorbestimmten Zeitraums abgebildet wird, um welche Strecke sich das Flurförderzeug in diesem vorbestimmten Zeitraum voraussichtlich bewegen wird, was wiederum Niederschlag in der berechneten Schutzzone finden wird. Weiterhin kann davon ausgegangen werden, dass das Flurförderzeug in einer Draufsicht einen bekannten Fahrzeuggrundriss aufweist und die Schutzzone kann anhand des Fahrzeuggrundrisses derart berechnet werden, dass eine vorhergesagte Fahrzeugkontur, welche einer von dem Flurförderzeug in einem vorbestimmten Zeitraum zu überstreichenden Fläche entspricht, als die Schutzzone verwendet wird.

Somit kann mit dem erfindungsgemäßen Verfahren die von dem Fahrzeug in einem vorbestimmten Zeitraum voraussichtlich überstrichene Fläche exakt abgebildet werden und je nach Auflösung der zur Verfügung stehenden Sensordaten kann eine einzige, sich auf die aktuelle Betriebssituation des Flurförderzeugs anpassende Schutzzone erhalten werden, welche wiederum dem oben beschriebenen Verfahren zugrunde gelegt werden kann. Dementsprechend können bereits an dieser Stelle Fehldetektionen vermieden werden und die Vorhersage von Hindernissen in einem Fahrweg des Flurförderzeugs kann auf unterschiedlichste Fahrzeugtypen angewandt werden, solange der jeweilige bekannte Fahrzeuggrundriss der entsprechenden Fahrzeugtypen beim Ausführen des Verfahrens zur Verfügung steht. Selbstverständlich ist es in diesem Zusammenhang ebenfalls möglich, den Fahrzeuggrundriss derart zu definieren, dass er größer gewählt wird als die eigentlichen Außenabmessungen des entsprechenden Flurförderzeugs, beispielsweise um aufzunehmende Lasten oder einzuhaltende Abstandstoleranzen berücksichtigen zu können.

Hierbei kann das Berechnen der vorhergesagten Fahrzeugkontur in Polarkoordinaten durchgeführt werden, wobei insbesondere der Pol des Polarkoordinatensystems einen Mittelpunkt des Flurförderzeugs bezogen auf seine Längs- sowie Breitenachse entsprechen kann und/oder die Polachse des Polarkoordinatensystems der Hauptfahrrichtung des Flurförderzeugs entsprechen kann.

Durch diese Verwendung von Polarkoordinaten kann der rechnerische Aufwand der Hindernisdetektion sehr gering gehalten werden, da weder trigonometrische Funktionen gelöst noch Wurzeln berechnet werden müssen. Vielmehr ist durch eine Interpolation der durch Konturpunkte vorgegebenen vorhergesagten Fahrzeugkontur, welche der Auflösung der eingesetzten wenigstens einen Sensoreinheit entspricht, die Detektion von Hindernissen lediglich als ein Vergleich von detektierten Abständen mit vorhergesagten Abständen zu implementieren und demzufolge auf eine Größer-Gleich-Operation zurückzuführen. Anders ausgedrückt kann bei einer Detektion eines Objekts in einem bestimmten Winkel zu der Polachse des Polarkoordinatensystems ein Vergleich zwischen dem ermittelten Abstand zwischen dem Objekt und dem Flurförderzeug und einem vorhergesagten Abstand durchgeführt werden, wobei bei einer Unterschreitung mit einer Kollision zu rechnen ist.

Weiterhin kann das Berechnen der vorhergesagten Fahrzeugkontur mittels einer Berechnung einer Mehrzahl von Stützpunkten durchgeführt werden, welche einer Berechnung von Positionen des Fahrzeugs zu aufeinanderfolgenden Zeitpunkten in der Zukunft entspricht. Hierbei kann die Anzahl der Stützpunkte abhängig von der momentanen Fahrzeuggeschwindigkeit gewählt werden, um in der oben beschriebenen Weise eine optimal konstruierte Schutzzone zu erhalten, und auch die Granularität der Stützpunktberechnung kann in einer Weise durchgeführt werden, die einen optimalen Kompromiss zwischen Rechenaufwand und Auflösung der Schutzzone bietet. Insbesondere kann ebenfalls eine Interpolation oder Glättung der die Stützpunkte enthaltenden Trajektorien als Grenzlinien der Schutzzone durchgeführt werden.

Wie bereits weiter oben angesprochen, betrifft die vorliegende Erfindung ferner ein Flurförderzeug, welches dazu eingerichtet ist, ein Verfahren der eben beschriebenen Art während seines Betriebs auszuführen, umfassend einen Fahrzeugkörper, wenigstens eine Sensoreinheit, welche in Hauptfahrrichtung des Flurförderzeugs angeordnet und dazu eingerichtet ist, in einem vorbestimmten Winkelbereich Hindernisse erfassen zu können, einen Geschwindigkeitssensor und einen Lenkwinkelsensor, sowie eine Steuereinheit, welche dazu eingerichtet ist, Daten von dem Geschwindigkeitssensor und dem Lenkwinkelsensor zu erhalten, eine Schutzzone in der oben beschriebenen Weise zu berechnen, eine Lenkwinkeldifferenz zu beiden Seiten zu berechnen, bei welchejeweils eine Kollision mit einem innerhalb der Schutzzone erfassten Hindernis vermieden wird, und einen momentanen Schwierigkeitsgrad der Hindernisvermeidung anhand der berechneten Lenkwinkeldifferenzen zu klassifizieren und/oder eine vorbestimmte Maßnahme anhand der berechneten Lenkwinkeldifferenzen auszulösen.

Bei der Ermittlung der Schutzzone kann wie angesprochen ein Berechnen einer Fahrzeugkontur anhand eines bekannten Fahrzeugumrisses erfolgen. Hierbei kann erneut der zur Berechnung der vorhergesagten Fahrzeugkontur verwendete Fahrzeuggrundriss größer gewählt werden als der eigentliche Fahrzeugkörper, um aufzunehmende Lasten und Abstandtoleranzen berücksichtigen zu können.

Weiterhin soll an dieser Stelle festgehalten sein, dass der vorbestimmte Winkelbereich, in welchem die wenigstens eine Sensoreinheit die Umgebung des Flurförderzeugs erfasst, zweckmäßigerweise wenigstens so groß wie ein möglicher Lenkwinkel des Flurförderzeugs sein sollte und im Optimalfall 180° um die Hauptfahrrichtung betragen sollte.

Wenngleich an unterschiedliche Typen von Sensoreinheiten in erfindungsgemäßen Flurförderzeugen gedacht werden kann, so kann diese Sensoreinheit insbesondere eine LIDAR-Einheit umfassen, wobei sich derartige Sensortypen durch eine hohe Genauigkeit und Zuverlässigkeit bei einem angemessenen Preis auszeichnen.

Zuletzt soll darauf hingewiesen sein, dass es sich bei dem Flurförderzeug der vorliegenden Erfindung um ein manuell geführtes Flurförderzeug handeln kann und demzufolge das erfindungsgemäße Verfahren zum Unterstützen eines menschlichen Fahrers davon dient, wenngleich prinzipiell auch eine Verwendung als Sicherheitssystem in einem autonom geführten Fahrzeug nicht ausgeschlossen sein soll.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine schematische Darstellung einer Betriebssituation eines erfindungsgemäßen Flurförderzeugs bei einem vorbestimmten Lenkwinkel;
- Figur 2: eine schematische Darstellung zur Definition einer Schutzzone in dem Beispiel aus Figur 1;
- Figur 3: eine schematische Darstellung einer internen Repräsentation der Schutzzone sowie der Erkennung eines Hindernisses;
- Figur 4: eine schematische Darstellung eines Berechnens von Lenkwinkeldifferenzen zum Vermeiden einer Kollision mit einem Hindernis;
- Figur 5: eine schematische Darstellung einer weiteren Betriebssituation eines erfindungsgemäßen Flurförderzeugs;
- Figur 6: eine vergleichende Darstellung zweier Betriebssituationen eines erfindungsgemäßen Flurförderzeugs;
- Figur 7: eine Übersicht über mehrere Betriebssituationen eines erfindungsgemäßen Flurförderzeugs mit entsprechenden Schwierigkeitsgraden; und
- Figur 8: eine schematische Darstellung eines Bestimmens einer maximal zulässigen Geschwindigkeit eines erfindungsgemäßen Flurförderzeugs.

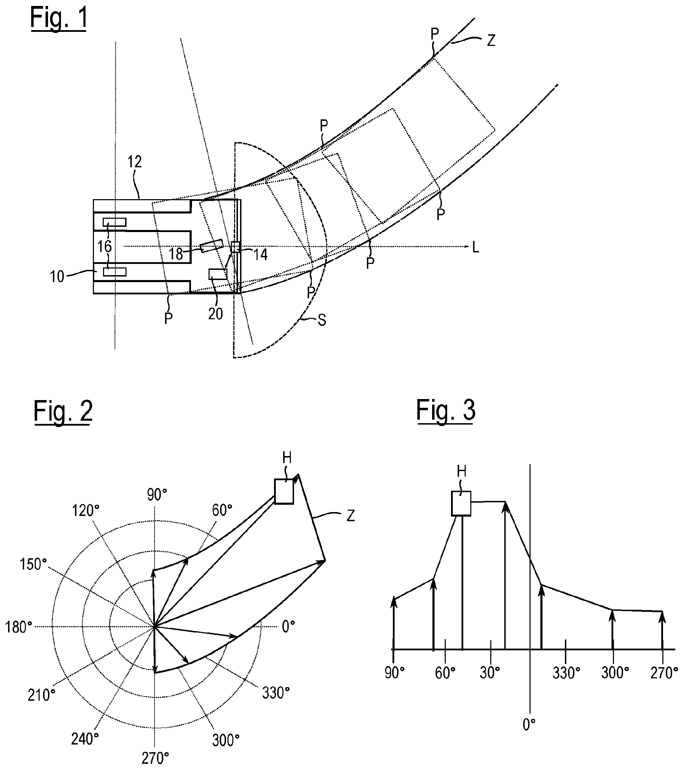

Figur 1 zeigt in einer schematischen Draufsicht zunächst einmal eine Betriebssituation eines erfindungsgemäßen Flurförderzeugs 10, welches bezüglich seiner Hauptfahrrichtung bzw. Längsrichtung L eine Linkskurve mit einem Lenkwinkel von 15° fährt, um die Berechnung einer Schutzzone des Flurförderzeugs 10 zu illustrieren.

Das Flurförderzeug 10 weist hierbei einen bekannten Fahrzeuggrundriss 12 auf, welcher in einer Weise über den eigentlichen Fahrzeugkörper hinausragt, dass auch möglicherweise von dem Fahrzeug 10 getragene Lasten abgedeckt sind. Zudem umfasst das Flurförderzeug 10 eine Sensoreinheit 14, welche an der Vorderseite des Flurförderzeugs 10 gemäß der Hauptfahrrichtung L angeordnet ist und einen Winkelbereich von wenigstens 180° abdeckt, wie durch das schematisch dargestellte Sensorfeld S in Figur 1 angedeutet ist, wobei sich die Ausdehnung des Sensorfelds S in der Praxis selbstverständlich wesentlich weiter um das Fahrzeug 10 herum erstrecken wird, als in der schematischen Ansicht aus Figur 1 angedeutet.

Ferner umfasst das Flurförderzeug 10 ein Paar von ungelenkten Rädern 16 sowie ein gelenktes Rad 18 und im hier dargestellten Fall handelt es sich bei dem Flurförderzeug 10 um ein manuell gesteuertes Flurförderzeug, welches zum Transport von Objekten in Logistikeinrichtungen vorgesehen und eingerichtet ist. Zu diesem Zweck umfasst es ferner eine lediglich schematisch dargestellte Steuereinheit 20 sowie nicht weiter gezeigte Geschwindigkeits- und Lenkwinkelsensoren, welche ihre Daten ebenso wie die Sensoreinheit 14 an die Steuereinheit 20 liefern.

Wie aus Figur 1 zu entnehmen ist, wird von der Steuereinheit 20 ein Verfahren zum Definieren einer Schutzzone durchgeführt, deren Umriss in Figur 1 durch zwei kurvenförmige Linien schematisch angedeutet und mit dem Bezugszeichen Z bezeichnet ist. Die resultierende Schutzzone Z entspricht einer vorhergesagten Fahrzeugkontur, welche anhand des bekannten Fahrzeuggrundrisses 12, der momentanen Geschwindigkeit und des momentanen Lenkwinkels bestimmt wird, welche von den bereits angesprochenen Geschwindigkeits- und Lenkwinkelsensoren geliefert werden.

Hierbei wird das erfindungsgemäße Verfahren zum Definieren der Schutzzone Z mittels eines iterativen Berechnens einer Mehrzahl von Stützpunkten P durchgeführt, welche jeweils den Ecken des Fahrzeugumrisses 12 entsprechen, wenn das Fahrzeug 10 auf der angesprochenen Kurvenbahn um einen bestimmten Weg fortgeschritten ist. Derartige extrapolierte Positionen des Flurförderzeugs 10 sind in Figur 1 jeweils gestrichelt dargestellt. Anhand der derart bestimmten Stützpunkte P kann nun die Schutzzone Z bestimmt werden, wobei sowohl die Granularität der Auswertung der Stützpunkte P als auch die Anzahl der in Betracht gezogenen Stützpunkte P geeignet wählbar sind und gegebenenfalls eine Interpolation der Stützpunkte P zur Glättung der Umrisse der Schutzzone Z durchgeführt werden kann.

Dementsprechend kann bei einer Betrachtung in Polarkoordinaten, in welchen die Hauptfahrrichtung bzw. Längsrichtung L des Flurförderzeugs 10 der Polachse 0° entspricht, eine Schutzzone Z wie in Figur 2 dargestellt erhalten werden. Wird diese Schutzzone Z aus Figur 2 nun ferner in einem Histogramm aufgetragen, in welchem der Polarwinkel die x-Achse bildet, so ergibt sich die Darstellung aus Figur 3, in welcher wiederum die Hauptfahrrichtung bzw. Längsrichtung L bei 0° liegt und die Tatsache, dass sich das Fahrzeug 10 gerade in einer Linkskurve befindet, dazu führt, dass der Winkelbereich zwischen 30° und 60° eine größere Ausdehnung in Bezug auf die Schutzzone Z wiedergibt.

Insbesondere kann durch die Verwendung von Polarkoordinaten ein Hindernis H, welches in den Figuren 2 und 3 dargestellt ist, mit niedrigem Berechnungsaufwand als in die Schutzzone Z fallend klassifiziert werden, indem eine einfache Abstandsberechnung im entsprechenden Winkel durchgeführt wird. Auf diese Weise kann mit dem erfindungsgemäßen Verfahren in einem derartigen Flurförderzeug eine optimale Schutzzone Z in einer Art und Weise bestimmt werden, dass Hindernisse H zuverlässig festgestellt werden können, andererseits aber falsch positive Ergebnisse durch die optimale Definition der Schutzzone Z minimiert oder gar ganz ausgeschlossen werden.

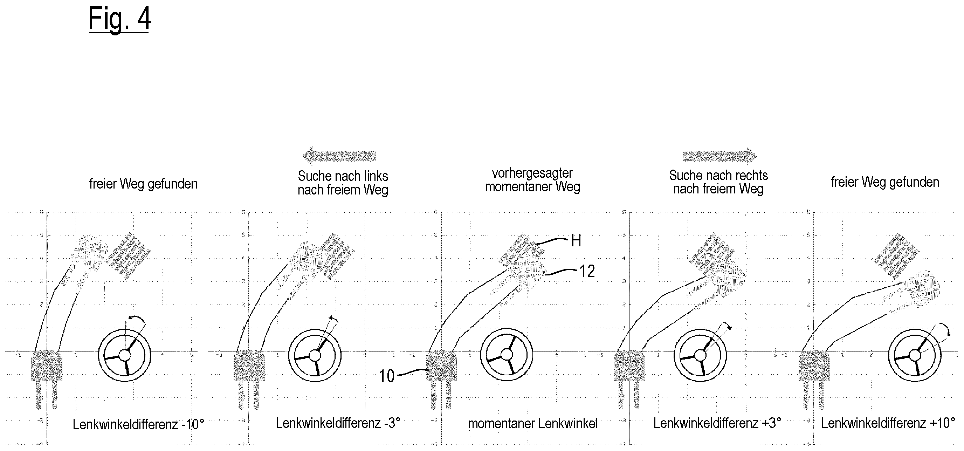

Anhand dieser Bestimmung einer Schutzzone soll nun anhand von Figur 4 die erfindungsgemäß verwendete Berechnung einer Lenkwinkeldifferenz zum Verhindern einer Kollision mit dem Hindernis zu beiden Seiten beschrieben sein.

In dem in Figur 4 in der Mitte dargestellten Fall fährt das Flurförderzeug 10 eine Rechtskurve und es ist festgestellt worden, dass sich ein Hindernis H in Form einer Palette auf dem entsprechenden vorhergesagten Weg befindet, welcher der Schutzzone des Fahrzeugs 10 entspricht. Ausgehend von diesem momentanen Lenkwinkel wird nun sowohl eine Vergrößerung des momentanen Lenkwinkels, also ein Ausweichen nach rechts, als auch eine Verkleinerung des momentanen Lenkwinkels, also ein Ausweichen nach links, in Echtzeit simuliert und anhand des bekannten Fahrzeuggrundrisses 12 des Flurförderzeugs 10 lässt sich ableiten, dass eine Lenkwinkeldifferenz von wenigstens 10° nach rechts oder links notwendig ist, um dem Hindernis H auszuweichen, wie aus den Darstellungen ganz rechts und ganz links in Fig. 4 zu erkennen ist, während eine Lenkwinkeldifferenz von beispielsweise 3° nach rechts oder links jeweils noch nicht ausreichend ist, wie sich aus den weiteren Darstellungen ergibt.

Somit können mit diesem Vorgehen jeweilige benötigte Lenkwinkeldifferenzen zu beiden Seiten abgeleitet werden, welche in der im Folgenden beschriebenen Klassifizierung eines momentanen Schwierigkeitsgrads der Hindernisvermeidung verwendet werden können, wobei in der Regel die kleinere der beiden Lenkwinkeldifferenzen zur Klassifizierung verwendet werden wird.

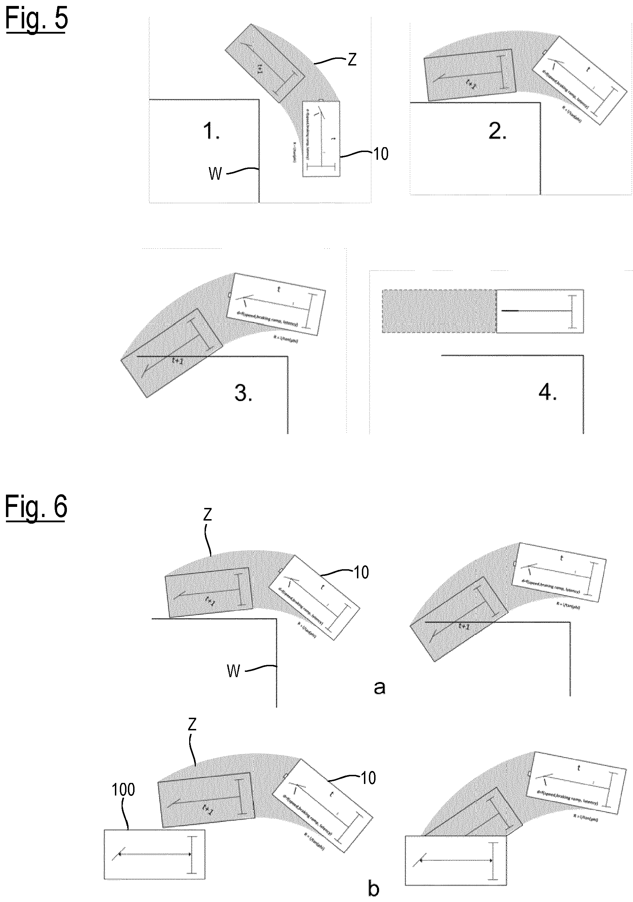

Hierzu sei zunächst auf Figur 5 verwiesen, welche in ihren vier Darstellungen 1. bis 4. ein Durchfahren einer Kurve im Bereich einer rechtwinkligen Wand W durch ein Flurförderzeug 10 illustriert, welches jeweils mit seiner gemäß der oben beschriebenen und in Fig. 1 dargestellten Vorgehensweise bestimmten Schutzzone Z gezeigt ist. Eine solche Situation stellt einen typischen Betriebsfall eines solchen Flurförderzeugs 10 dar und sollte demzufolge von einem menschlichen Fahrer des Flurförderzeugs 10 ohne Probleme zu bewältigen sein.

Allerdings zeigt es sich, dass nach dem Einbiegen in Darstellung 1. aus Figur 5 in dem Zustand der Darstellung 2. und insbesondere Darstellung 3. die rechtwinklige Wand in die Schutzzone Z des Flurförderzeugs 10 hineinragt und damit als Hindernis erfasst wird. Hierbei kann der Fahrer des Flurförderzeugs 10 jedoch bereits durch geringes Gegenlenken nach rechts, bzw. Geradestellen seines Lenkrads im Rahmen einer normalen Kurvenfahrt eine Kollision mit der Wand verhindern, so dass aufgrund der entsprechend festgestellten kleinen benötigten Lenkwinkeldifferenz zum momentanen Wert zu keiner Zeit eine problematische Situation eintritt und demzufolge der Schwierigkeitsgrad zu jedem Zeitpunkt als niedrig bestimmt werden kann. Dementsprechend ist auch kein Einleiten von Maßnahmen notwendig und der Fahrer des Flurförderzeugs 10 kann unbehelligt und wie in Darstellung 4. aus Figur 5 gezeigt am Kurvenausgang die Lenkung geradestellen und seine Fahrt fortsetzen, ohne dass das zeitweilige Vorliegen der Wand in der Schutzzone Z einen Einfluss auf den beschriebenen Ablauf gehabt hätte.

In Figur 6 ist in Darstellung a zunächst einmal erneut die Situation aus Figur 5 zum Vergleich angedeutet, welche eben diskutiert worden ist, während in Darstellung b ein Fall gezeigt ist, in welchem die entsprechende Situation mit einem hohen Schwierigkeitsgrad bewertet wird. Hierbei wird ein weiteres Flurförderzeug 100 als ein Hindernis erkannt, welches in die Schutzzone Z des Flurförderzeugs 10 zu einem gewissen Zeitpunkt eintritt. Da sich das Flurförderzeug 10 mit einer höheren Geschwindigkeit verglichen mit der Darstellung a bewegt und dem Hindernis bereits näher gekommen ist, wird diese Situation mit einem hohen Schwierigkeitsgrad bewertet, wenngleich auch hier eine relativ kleine Lenkwinkeldifferenz ausreichend wäre, um dem Hindernis auszuweichen. Somit zeigt sich, dass durch die Hinzuziehung von weiteren Parametern zusätzlich zu der Lenkwinkeldifferenz bei der Bewertung des momentanen Schwierigkeitsgrads das erfindungsgemäße Verfahren weiter verbessert werden kann.

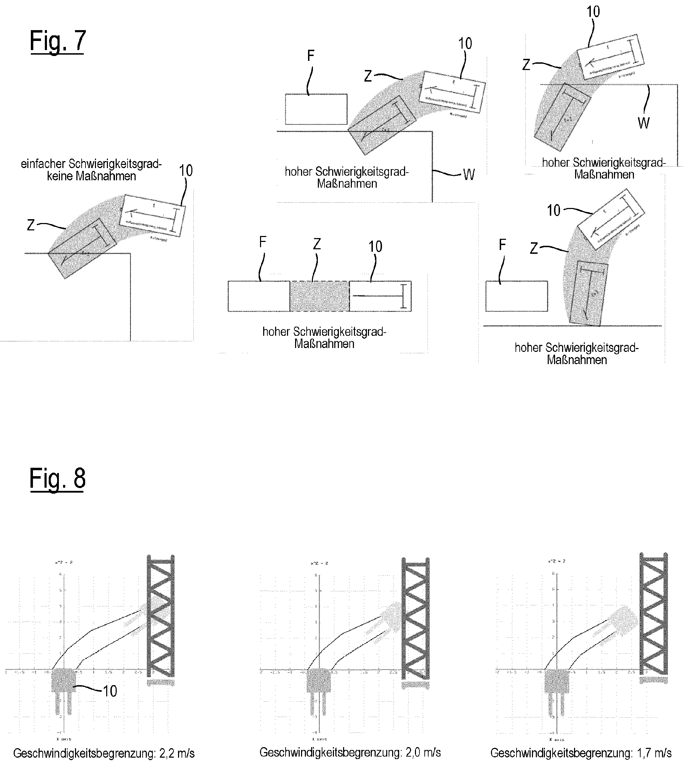

Figur 7 zeigt nun einige weitere Szenarien, in welchen ein hoher Schwierigkeitsgrad ermittelt wird und entsprechende Maßnahmen eingeleitet werden können, beispielsweise ein Ausgeben einer Warnung an einen Fahrer des Flurförderzeugs 10 und/oder eine automatische Verringerung einer momentanen oder maximalen Geschwindigkeit davon.

Während wie im Zusammenhang mit Figur 5 besprochen und in Figur 7 links erneut angedeutet ein Durchfahren einer Kurve in der Nähe einer rechtwinkligen Wand aufgrund der geringen notwendigen Lenkwinkeldifferenz zum Verhindern einer Kollision mit einem einfachen Schwierigkeitsgrad bewertet wird und demzufolge keine Maßnahmen eingeleitet werden, zeigen die anderen vier Darstellungen jeweils Fälle, in welchen hohe Schwierigkeitsgrade ermittelt werden. Hierbei liegt in dem oben in der Mitte dargestellten Fall ein weiteres Flurförderzeug F im Bereich der rechtwinkligen Wand W vor, welches am Kurvenausgang eine wesentlich höhere Lenkdifferenz nach rechts erfordern würde und demzufolge eine schwierigere Situation bedingt. In ähnlicher Weise ist in dem oben rechts dargestellten Fall das Flurförderzeug 10 der Kurvenbahn zu weit gefolgt und damit der Wand W unter einem ungünstigen Winkel bereits sehr nahe gekommen. Auch hier ist eine große Lenkwinkeldifferenz nach rechts zum Verhindern einer Kollision notwendig und die Situation wird mit einem hohen Schwierigkeitsgrad bewertet.

In der Darstellung unten rechts liegt erneut ein weiteres Flurförderzeug F als zusätzliches Hindernis vor und das hier betrachtete Flurförderzeug 10 fährt in einem ungünstigen Winkel für ein Ausweichen nach rechts oder links auf die Wand zu. Somit liegt auch hier ein hoher Schwierigkeitsgrad vor und geeignete Maßnahmen wie ein automatisches Abbremsen und/oder ein Warnen eines Fahrers können eingeleitet werden. Zuletzt ist in der Mitte unten ein Fall dargestellt, in welchem bei einer Geradeausfahrt ein Hindernis in der Schutzzone Z erfasst wird. Für solche Fälle kann festgelegt sein, dass in jedem Fall eine Klassifizierung mit hohem Schwierigkeitsgrad vorgenommen wird, da davon ausgegangen werden kann, dass unter keinen Umständen ein Fall auftreten sollte, in welchem das Flurförderzeug 10 frontal auf ein Hindernis zufährt.

Zuletzt soll unter Bezugnahme auf Figur 8 noch eine beispielhafte Maßnahme im Fall eines Feststellens eines Hindernisses in einer Schutzzone eines Flurförderzeugs 10 beschrieben sein, nämlich eine automatische Verringerung der Geschwindigkeit. Hierbei wird zunächst in der linken Darstellung festgestellt, dass das Flurförderzeug 10 aufgrund seines momentanen Lenkwinkels auf eine Wand zufährt, welche in die Schutzzone des Flurförderzeugs 10 eingetreten ist. Anhand des oben beschriebenen Vorgehens wird daraufhin bestimmt, dass es sich hierbei um eine Situation handelt, welches das Einleiten einer Maßnahme notwendig macht, vorliegend ein Verringern der Geschwindigkeit des Fahrzeugs 10.

Zu diesem Zweck wird nun ausgehend von der momentanen Geschwindigkeit des Flurförderzeugs 10 von 2,2 m/s ermittelt, um wieviel die Geschwindigkeit verringert werden muss, um das Fahrzeug 10 gerade noch vor dem Hindernis zum Stoppen zu bringen. Hierbei ergibt sich ein Wert von 1,7 m/s, während bei einer Geschwindigkeit von 2,0 m/s weiterhin eine Kollision geschehen würde, wie in den Darstellungen rechts und in der Mitte von Figur 8 angedeutet. Dementsprechend wird eine Verringerung der Geschwindigkeit auf 1,7 m/s vorgenommen, wobei während der weiteren Fahrt des Flurförderzeugs 10 weitere Überprüfungen in derselben Weise vorgenommen werden, um bei einer weiteren Annäherung an die Wand eine weitere Verlangsamung des Fahrzeugs 10 vornehmen zu können oder bei einem Ausweichen, d.h. einem Lenken nach links, ggf. die Geschwindigkeitsbeschränkung wieder aufzuheben.

## Patentansprüche

1. Verfahren zur Hindernisbehandlung in einem Flurförderzeug (10), welches wenigstens eine Sensoreinheit (14) umfasst, welche in Hauptfahrrichtung (L) des Flurförderzeugs (10) angeordnet und dazu eingerichtet ist, in einem vorbestimmten Winkelbereich (S) Hindernisse (H) erfassen zu können,
das Verfahren umfassend:
- Erfassen einer momentanen Geschwindigkeit und eines momentanen Lenkwinkels von wenigstens einem gelenkten Rad (18) des Flurförderzeugs (10) mittels eines Geschwindigkeitssensors bzw. eines Lenkwinkelsensors des Flurförderzeugs (10);
- Berechnen einer Schutzzone (Z) anhand der momentanen Geschwindigkeit und des momentanen Lenkwinkels;
- Auswerten der von der wenigstens einen Sensoreinheit (14) gelieferten Daten innerhalb der Schutzzone (Z) des Flurförderzeugs (10), und
- bei Feststellen eines Hindernisses (H) in der Schutzzone (Z):
∘ Berechnen einer jeweiligen Lenkwinkeldifferenz zu beiden Seiten, bei welcher jeweils eine Kollision mit dem Hindernis (H) vermieden wird; und
∘ Klassifizieren eines momentanen Schwierigkeitsgrads der Hindernisvermeidung zumindest anhand der berechneten Lenkwinkeldifferenzen anhand eines Lenkwinkeldifferenzgrenzwerts, und/oder
∘ Auslösen einer vorbestimmten Maßnahme anhand der berechneten Lenkwinkeldifferenzen anhand eines Lenkwinkeldifferenzgrenzwerts.

2. Verfahren nach Anspruch 1,
wobei die kleinere der beiden Lenkwinkeldifferenzen zur Klassifizierung des momentanen Schwierigkeitsgrads herangezogen wird.

3. Verfahren nach Anspruch 1 oder 2,
wobei in Abhängigkeit von dem momentanen Schwierigkeitsgrad eine vorbestimmte Maßnahme an dem Flurförderzeug (10) ausgelöst wird.

4. Verfahren nach Anspruch 3,
wobei die vorbestimmte Maßnahme ein Verringern einer momentanen und/oder maximalen Geschwindigkeit des Flurförderzeugs (10) umfasst.

5. Verfahren nach Anspruch 3,
wobei die vorbestimmte Maßnahme ein Ausgeben einer entsprechenden Mitteilung an eine Bedienperson umfasst.

6. Verfahren nach einem der vorhergehenden Ansprüche,
wobei bei dem Klassifizieren des momentanen Schwierigkeitsgrads und/oder dem Auslösen der vorbestimmten Maßnahme weitere Parameter berücksichtigt werden, insbesondere wenigstens einer der folgenden:
- der momentane Lenkwinkel des Flurförderzeugs (10),
- die momentane Geschwindigkeit des Flurförderzeugs (10),
- ein Erfahrungsniveau eines Fahrers des Flurförderzeugs (10),
- die berechnete Lenkwinkeldifferenz im Vergleich zum momentanen Lenkwinkel.

7. Verfahren nach einem der vorhergehenden Ansprüche,
wobei die Klassifizierung für momentane Schwierigkeitsgrade wenigstens einen einfachen Schwierigkeitsgrad und einen hohen Schwierigkeitsgrad umfasst.

8. Verfahren nach einem der vorhergehenden Ansprüche,
ferner umfassend ein Festlegen eines maximalen Lenkwinkels des Flurförderzeugs (10), welcher zum Vermeiden einer Kollision nicht überschritten werden kann.

9. Verfahren nach einem der vorhergehenden Ansprüche,
wobei das Flurförderzeug (10) in einer Draufsicht einen bekannten Fahrzeuggrundriss (12) aufweist und die Schutzzone (Z) anhand des Fahrzeuggrundrisses (12) derart berechnet wird, dass eine vorhergesagte Fahrzeugkontur (Z), welche einer von dem Flurförderzeug (10) in einem vorbestimmten Zeitraum zu überstreichenden Fläche entspricht, als die Schutzzone (Z) verwendet wird.

10. Verfahren nach Anspruch 9,
wobei das Berechnen der vorhergesagten Fahrzeugkontur (Z) in Polarkoordinaten durchgeführt wird und vorzugsweise der Pol des Polarkoordinatensystems einem Mittelpunkt des Flurförderzeugs (10) bezogen auf seine Längs- sowie Breitenachse entspricht und/oder die Polachse des Polarkoordinatensystems der Hauptfahrrichtung (L) des Flurförderzeugs (10) entspricht.

11. Verfahren nach einem der Ansprüche 9 und 10,
wobei das Berechnen der vorhergesagten Fahrzeugkontur (Z) mittels einer Berechnung einer Mehrzahl von Stützpunkten (P) durchgeführt wird.

12. Verfahren nach Anspruch 11,
wobei die Anzahl der Stützpunkte (P) abhängig von der momentanen Fahrzeuggeschwindigkeit gewählt wird.

13. Flurförderzeug (10), welches dazu eingerichtet ist, ein Verfahren nach einem der vorhergehenden Ansprüche während seines Betriebs auszuführen, umfassend:
- einen Fahrzeugkörper;
- wenigstens eine Sensoreinheit (14), welche in Hauptfahrrichtung (L) des Flurförderzeugs (10) angeordnet und dazu eingerichtet ist, in einem vorbestimmten Winkelbereich Hindernisse (H) erfassen zu können;
- einen Geschwindigkeitssensor und einen Lenkwinkelsensor; und
- eine Steuereinheit (20), welche dazu eingerichtet ist:
∘ Daten von dem Geschwindigkeitssensor und dem Lenkwinkelsensor zu erhalten,
∘ eine Schutzzone (Z) zu berechnen,
∘ eine Lenkwinkeldifferenz zu beiden Seiten zu berechnen, bei welcher jeweils eine Kollision mit einem innerhalb der vorhergesagten Fahrzeugkontur (Z) erfassten Hindernis (H) vermieden wird; und
∘ einen momentanen Schwierigkeitsgrad der Hindernisvermeidung anhand der berechneten Lenkwinkeldifferenzen anhand eines Lenkwinkeldifferenzwerts zu klassifizieren und/oder
∘ eine vorbestimmte Maßnahme anhand der berechneten Lenkwinkeldifferenzen anhand eines Lenkwinkeldifferenzwerts auszulösen.

14. Flurförderzeug (10) nach Anspruch 13,
wobei die wenigstens eine Sensoreinheit (14) eine LIDAR-Einheit umfasst.

15. Flurförderzeug (10) nach einem der Ansprüche 13 und 14, wobei es sich um ein manuell geführtes Flurförderzeug handelt.

## Claims

1. Method for handling obstacles in an industrial truck (10), which comprises at least one sensor unit (14) which is arranged in the main travel direction (L) of the industrial truck (10) and is designed to be able to detect obstacles (H) in a predetermined angular range (S),
the method comprising:
- detecting a current speed and a current steer angle of at least one steered wheel (18) of the industrial truck (10) by means of a speed sensor or a steer angle sensor of the industrial truck (10);
- calculating a protection zone (Z) on the basis of the current speed and the current steer angle;
- evaluating the data delivered by the at least one sensor unit (14) within the protection zone (Z) of the industrial truck (10), and
- in the event of identifying an obstacle (H) in the protection zone (Z):
∘ calculating a respective steer angle difference on both sides, at which in each case a collision with the obstacle (H) is avoided; and
∘ classifying a current degree of difficulty of avoiding the obstacle, at least on the basis of the calculated steer angle differences on the basis of a steer angle difference limit value, and/or
∘ triggering a predetermined measure on the basis of the calculated steer angle differences on the basis of a steer angle difference limit value.

2. Method according to claim 1,
wherein the smaller of the two steer angle differences is used for classifying the current degree of difficulty.

3. Method according to either claim 1 or claim 2,
wherein a predetermined measure is triggered on the industrial truck (10) depending on the current degree of difficulty.

4. Method according to claim 3,
wherein the predetermined measure includes reducing a current and/or maximum speed of the industrial truck (10).

5. Method according to claim 3,
wherein the predetermined measure includes outputting a corresponding message to an operator.

6. Method according to any of the preceding claims,
wherein during the classification of the current degree of difficulty and/or the triggering of the predetermined measure, further parameters are taken into account, in particular at least one of the following:
- the current steer angle of the industrial truck (10),
- the current speed of the industrial truck (10),
- the level of experience of a driver of the industrial truck (10),
- the calculated steer angle difference compared with the current steer angle.

7. Method according to any of the preceding claims,
wherein the classification for current degrees of difficulty includes at least one simple degree of difficulty and one high degree of difficulty.

8. Method according to any of the preceding claims,
further comprising fixing a maximum steer angle of the industrial truck (10), which cannot be exceeded, in order to avoid a collision.

9. Method according to any of the preceding claims,
wherein the industrial truck (10) has a known vehicle outline (12) in plan view, and the protection zone (Z) is calculated on the basis of the vehicle outline (12) such that a predicted vehicle contour (Z), which corresponds to a surface to be covered by the industrial truck (10) in a predetermined period of time, is used as the protection zone (Z).

10. Method according to claim 9,
wherein the calculation of the predicted vehicle contour (Z) is carried out in polar coordinates and preferably the pole of the polar coordinate system corresponds to a central point of the industrial truck (10) based on its longitudinal and width axis and/or the polar axis of the polar coordinate system of the main travel direction (L) of the industrial truck (10).

11. Method according to either of claims 9 and 10,
wherein the calculation of the predicted vehicle contour (Z) is carried out by means of a calculation of a plurality of support points (P).

12. Method according to claim 11,
wherein the number of support points (P) is selected depending on the current vehicle speed.

13. Industrial truck (10), which is configured for carrying out a method according to any of the preceding claims during its operation, comprising:
- a vehicle body;
- at least one sensor unit (14) which is arranged in the main travel direction (L) of the industrial truck (10) and is designed to be able to detect obstacles (H) in a predetermined angular range,
- a speed sensor and a steer angle sensor; and
- a control unit (20), which is configured:
∘ to obtain data from the speed sensor and the steer angle sensor,
∘ to calculate a protection zone (Z),
∘ to calculate a steer angle difference on both sides, at which in each case a collision with an obstacle (H) detected within the predicted vehicle contour (Z) is avoided; and
∘ classifying a current degree of difficulty of avoiding the obstacle on the basis of the calculated steer angle differences on the basis of a steer angle difference value, and/or
∘ triggering a predetermined measure on the basis of the calculated steer angle differences on the basis of a steer angle difference value.

14. Industrial truck (10) according to claim 13,
wherein the at least one sensor unit (14) comprises a LIDAR unit.

15. Industrial truck (10) according to either of claims 13 and 14, wherein this is a manually guided industrial truck.

## Revendications

1. Procédé de traitement d'obstacles dans un chariot de manutention (10), comprenant au moins une unité de détection (14) qui est disposée dans la direction de déplacement principale (L) du chariot de manutention (10) et qui est conçue pour pouvoir détecter des obstacles (H) dans une plage angulaire (S) prédéterminée,
le procédé consistant à :
- détecter une vitesse instantanée et un angle de braquage instantané d'au moins une roue directrice (18) du chariot de manutention (10) au moyen d'un capteur de vitesse ou d'un capteur d'angle de braquage du chariot de manutention (10) ;
- calculer une zone de protection (Z) à l'aide de la vitesse instantanée et de l'angle de braquage instantané ;
- évaluer les données fournies par ladite au moins une unité de détection (14) à l'intérieur de la zone de protection (Z) du chariot de manutention (10), et
- en cas de détection d'un obstacle (H) dans la zone de protection (Z) :
• calculer une différence d'angle de braquage respective des deux côtés, à laquelle une collision avec l'obstacle (H) est respectivement évitée ; et
• classifier un niveau de difficulté instantané de l'évitement de l'obstacle au moins à l'aide des différences d'angle de braquage calculées, à l'aide d'une valeur limite de différence d'angle de braquage, et/ou
• déclencher une action prédéterminée à l'aide des différences d'angle de braquage calculées, à l'aide d'une valeur limite de différence d'angle de braquage.

2. Procédé selon la revendication 1,
dans lequel la plus petite des deux différences d'angle de braquage est utilisée pour classifier le niveau de difficulté instantané.

3. Procédé selon la revendication 1 ou 2,
dans lequel une action prédéterminée est déclenchée sur le chariot de manutention (10) en fonction du niveau de difficulté instantané.

4. Procédé selon la revendication 3,
dans lequel l'action prédéterminée comprend la réduction d'une vitesse instantanée et/ou maximale du chariot de manutention (10).

5. Procédé selon la revendication 3,
dans lequel l'action prédéterminée comprend l'émission d'un message correspondant à un opérateur.

6. Procédé selon l'une des revendications précédentes,
dans lequel d'autres paramètres sont pris en compte lors de la classification du niveau de difficulté instantané et/ou lors du déclenchement de l'action prédéterminée, en particulier au moins l'un des paramètres suivants :
- l'angle de braquage instantané du chariot de manutention (10),
- la vitesse instantanée du chariot de manutention (10),
- un niveau d'expérience d'un conducteur du chariot de manutention (10),
- la différence d'angle de braquage calculée par comparaison à l'angle de braquage instantané.

7. Procédé selon l'une des revendications précédentes,
dans lequel la classification pour les niveaux de difficulté instantanés comprend au moins un niveau de difficulté simple et un niveau de difficulté élevé.

8. Procédé selon l'une des revendications précédentes,
consistant en outre à fixer un angle de braquage maximal du chariot de manutention (10) qui ne peut pas être dépassé pour éviter une collision.

9. Procédé selon l'une des revendications précédentes,
dans lequel le chariot de manutention (10) présente, en vue de dessus, un plan de base (12) connu, et la zone de protection (Z) est calculée à l'aide du plan de base (12) de telle sorte qu'un contour prédit (Z) du véhicule, qui correspond à une surface à balayer par le chariot de manutention (10) dans un intervalle de temps prédéterminé, est utilisé comme zone de protection (Z).

10. Procédé selon la revendication 9,
dans lequel le calcul du contour prédit (Z) du véhicule est effectué en coordonnées polaires et, de préférence, le pôle du système de coordonnées polaires correspond à un centre du chariot de manutention (10) par rapport à son axe longitudinal ainsi qu'à son axe de largeur et/ou l'axe polaire du système de coordonnées polaires correspond à la direction de déplacement principale (L) du chariot de manutention (10).

11. Procédé selon l'une des revendications 9 et 10,
dans lequel le calcul du contour prédit (Z) du véhicule est effectué au moyen d'un calcul d'une pluralité de points d'appui (P).

12. Procédé selon la revendication 11,
dans lequel le nombre de points d'appui (P) est choisi en fonction de la vitesse instantanée du véhicule.

13. Chariot de manutention (10) conçu pour mettre en œuvre un procédé selon l'une des revendications précédentes pendant son fonctionnement, comprenant :
- un corps de véhicule ;
- au moins une unité de détection (14) qui est disposée dans la direction de déplacement principale (L) du chariot de manutention (10) et qui est conçue pour pouvoir détecter des obstacles (H) dans une plage angulaire prédéterminée ;
- un capteur de vitesse et un capteur d'angle de braquage ; et
- une unité de commande (20) conçue pour
• obtenir des données du capteur de vitesse et du capteur d'angle de braquage,
• calculer une zone de protection (Z),
• calculer une différence d'angle de braquage des deux côtés, à laquelle une collision avec un obstacle (H) détecté à l'intérieur du contour prédit (Z) du véhicule est respectivement évitée ; et
• de classifier un niveau de difficulté instantané de l'évitement de l'obstacle à l'aide des différences d'angle de braquage calculées, et/ou
• déclencher une action prédéterminée à l'aide des différences d'angle de braquage calculées, à l'aide d'une valeur limite de différence d'angle de braquage.

14. Chariot de manutention (10) selon la revendication 13,
dans lequel ladite au moins une unité de détection (14) comprend une unité LIDAR.

15. Chariot de manutention (10) selon l'une des revendications 13 et 14, dans lequel il s'agit d'un chariot de manutention à guidage manuel.
